# EUROPEAN PATENT SPECIFICATION

(11) **EP 4 547 958 B1**
(45) Date of publication and mention of the grant of the patent: **28.01.2026**
(21) Application number: 23740932.1
(22) Date of filing: 30.06.2023
(51) Int. Cl.: F03D 7/04

(54) **WIND TURBINE WAKE LOSS CONTROL USING DETECTED DOWNSTREAM WAKE LOSS AS A FUNCTION OF WIND DIRECTION**
WINDTURBINEN-WIRBELVERLUSTSTEUERUNG MIT ERKANNTEM ABWÄRTS-WIRBELVERLUST ALS FUNKTION DER WINDRICHTUNG
COMMANDE DE PERTE DE SILLAGE D'ÉOLIENNE À L'AIDE D'UNE PERTE DE SILLAGE AVAL DÉTECTÉE EN FONCTION DE LA DIRECTION DU VENT

(30) Priority: 30.06.2022 DK PA202270349
(43) Date of publication of application: 07.05.2025
(73) Proprietor: VESTAS WIND SYSTEMS A/S, 8200 Aarhus N (DK)
(72) Inventor: CHRISTENSEN, Poul Brandt, 8200 Aarhus N (DK); FABER, Mark, 8200 Aarhus N (DK); VESTERGAARD, Jakob, 8200 Aarhus N (DK); MIRZAEI, Mahmood, 8200 Aarhus N (DK)
(74) Representative: Vestas Patents Department
(86) International application number: PCT/DK2023/050175
(87) International publication number: WO 2024/002450

(56) References cited:
- WO-A1-2015/039665
- US-A1- 2017 022 974
- US-A1- 2021 047 999
- US-B2- 9 551 322

## Description

### TECHNICAL FIELD

The invention relates to controlling a wind turbine of a wind park comprising a plurality of wind turbines. In particular, the invention relates to controlling the wind turbine in accordance with a wake loss control strategy to control wake generated by the wind turbine, the wake loss control strategy being determined based on wake loss experienced at a further wind turbine of the plurality of wind turbines, e.g. downstream of the wind turbine, as a function of wind direction.

### BACKGROUND

Wind turbines are used to capture energy in the wind as it flows past them, and to generate electrical power from the captured energy, e.g. to be supplied to an electrical grid. Often, several wind turbines are located in relatively close proximity to one another in a geographical area, where such a group of wind turbines may be referred to collectively as forming a wind park or wind farm.

The amount of wind energy that may be captured by a wind turbine varies in dependence on various environmental factors, such as wind speed and wind direction. For instance, a wind turbine may in general be most efficient at capturing wind energy when a rotor or nacelle of the turbine faces directly into the incoming wind direction, i.e. when the wind turbine is 'aligned' with the wind.

As wind flows past a wind turbine, wake, in the form of disturbed flow, is generated downstream of the wind turbine. That is, wind flow downstream of the wind turbine is perturbed or disturbed relative to upstream of the wind turbine. This disturbance can result in a reduction in the speed of the wind flow and/or an increase in the turbulence of the wind flow. Each of these result in a reduction in the amount of available energy that may be captured from the wind.

In a wind park, wake generated by a first, upstream wind turbine may impinge a second, downstream wind turbine, resulting in a reduction in the power generation efficiency of the downstream wind turbine relative to if the upstream wind turbine was not present, i.e. relative to if the wake effects caused by the upstream turbine were not present. This may be referred to as wake loss experienced by the downstream wind turbine.

It is known to perform so-called 'wake steering' of a wind turbine to steer generated wake of an upstream turbine away from a downstream turbine. This may involve controlling the upstream turbine to be misaligned relative to the incoming wind. While this may reduce the energy capturing efficiency of the upstream turbine, the increase in energy capturing efficiency of the downstream turbine may result in an overall increase in the energy capturing efficiency of the wind park.

Known methods for performing wake steering can be disadvantageous in that wake steering is not performed when it needs to be, it is performed when it does not need to be, and/or it is performed incorrectly, such that reduced wake effects experienced by downstream turbines are not properly achieved. These disadvantages can result from one or more of: inaccurate detection of the wind turbine nacelle position or relative wind speed; inaccurate information relating to the relative positioning of wind turbines in a wind park; and/or, changes to generated wake caused by other factors, such as terrain or other obstacles, wind conditions, etc. The resulting effect may be a reduction in overall energy capturing efficiency of a wind park.

WO 2015/039665 discloses controlling a wind turbine in accordance with wake sectors assigned to different wind directions. It is disclosed to provide a normal pitch schedule and a modified pitch schedule and controlling according to the normal pitch schedule if the wind direction falls outside the wake sector and otherwise according to the modified pitch schedule.

It is against this background to which the present invention is set.

### SUMMARY OF THE INVENTION

According to an aspect of the present invention there is provided a method for controlling a wind turbine of a wind park comprising a plurality of wind turbines. The method comprises retrieving a predefined wake loss control strategy for the wind turbine, the predefined wake loss control strategy being for controlling the wind turbine to perform one or more wake loss control actions as a function of wind direction in the vicinity of the wind turbine, the predefined wake control strategy being for controlling operation of the wind turbine to adjust wake generated by the wind turbine at wind directions predicted to result in wake loss at a further wind turbine of the plurality of wind turbines. The method comprises receiving, from the further wind turbine, a signal indicative of a wind direction determined to result in a defined wake condition or state at the further wind turbine. The method comprises determining a difference between a wind direction predicted to result in the defined wake condition at the further wind turbine and the received wind direction determined to result in the defined wake condition. The method comprises determining an adjusted wake loss control strategy that is for controlling the wind turbine to perform the one or more wake loss control actions of the predefined wake loss control strategy as a function of wind direction offset by the determined difference. The method may comprise controlling the wind turbine in accordance with the adjusted wake loss control strategy.

The defined wake condition may be a full wake condition.

The received wind direction may be a wind direction in which the further wind turbine is at a centre of the wake generated by the wind turbine.

Determining the adjusted wake loss control strategy may comprise offsetting a wind direction at which the predefined wake loss control strategy is activated by the determined difference.

The method may comprise, at the further wind turbine: determining the wind direction resulting in the defined wake condition at the further wind turbine; and, transmitting the signal indicative of the wind direction determined to result in the defined wake condition at the further wind turbine to the wind turbine.

The wind direction resulting in the defined wake condition at the further wind turbine may be determined when the wind turbine is not performing the one or more wake loss control actions.

The wind direction resulting in the defined wake condition at the further wind turbine may be determined during a training period in which the plurality of wind turbines of the wind park are operated for a plurality of different wind directions.

Determining the wind direction resulting in the defined wake condition may comprise, for a plurality of different wind directions: receiving sensor signals from one or more sensors of the further wind turbine; and, determining a parameter indicative of loading imbalance on a rotor of the further wind turbine based on the received sensor signals.

The sensor signals from one or more sensors may be blade load signals from one or more blade load sensors of rotor blades of the further wind turbine. The parameter may be a yaw moment of the rotor of the further wind turbine, determined based on the received blade load signals.

When the adjusted wake loss control strategy is activated at the wind turbine to perform the one or more wake loss control actions, the method may comprise iteratively performing steps of:
at the further wind turbine:
   monitoring the parameter indicative of loading imbalance based on sensor signals from the one or more sensors; and;
   transmitting a signal indicative of the monitored parameter to the wind turbine; and,
at the wind turbine:
   receiving the signal indicative of the monitored parameter from the further wind turbine;
   determining a further wind direction offset, based on the received monitored parameter, for reducing the loading imbalance on the rotor of the further wind turbine;
   determining a further adjusted wake loss control strategy that is for controlling the wind turbine to perform the one or more wake loss control actions of the predefined wake loss control strategy as a function of wind direction offset by the determined difference and the further wind direction offset; and,
   controlling the wind turbine in accordance with the further adjusted wake loss control strategy.

Controlling the wind turbine in accordance with the adjusted wake loss control strategy may comprise: receiving, from one or more wind direction sensors of the wind turbine or wind park, a measured wind direction in the vicinity of the wind turbine; and, activating the adjusted wake loss control strategy to perform the one or more wake loss control actions if the measured wind direction offset by the determined difference is within a predefined range of wake loss control activation wind directions.

The one or more wake loss control actions may comprise at least one of: performing yaw control to rotate a nacelle and rotor of the wind turbine about a yaw angle relative to a tower of the wind turbine to adjust a direction of wake generated by the wind turbine; performing tilt control to generate a tilt moment about a tilt axis to adjust a direction of the wake generated by the wind turbine; performing collective pitch control of rotor blades of the wind turbine; and, performing individual pitch control of the rotor blades of the wind turbine.

According to another aspect of the present invention there is provided a non-transitory, computer readable storage medium storing instruction therein that, when executed by one or more computer processors, cause the one or more computer processors to execute the method defined above.

According to another aspect of the present invention there is provided a controller for controlling a wind turbine of a wind park comprising a plurality of wind turbines. The controller is configured to retrieve a predefined wake loss control strategy for the wind turbine, the predefined wake loss control strategy being for controlling the wind turbine to perform one or more wake loss control actions as a function of wind direction in the vicinity of the wind turbine, the predefined loss control strategy being for controlling operation of the wind turbine to adjust wake generated by the wind turbine at a wind direction predicted to result in wake loss at a further wind turbine of the plurality of wind turbines. The controller is configured to receive, from the further wind turbine, a signal indicative of a wind direction determined to result in wake loss at the further wind turbine. The controller is configured to determine a difference between the wind direction predicted to result in wake loss and the received wind direction determined to result in wake loss. The controller is configured to determine an adjusted wake loss control strategy that is for controlling the wind turbine to perform the one or more wake loss control actions of the predefined wake loss control strategy as a function of wind direction offset by the determined difference. The controller is configured to control the wind turbine in accordance with the adjusted wake loss control strategy.

According to another aspect of the present invention there is provided a control system for a wind park as defined above comprising a plurality of wind turbines including the wind turbine and the further wind turbine. The control system comprises a controller as defined above. The control system comprises a further controller for controlling the further wind turbine, the further controller being configured to: determine the wind direction resulting in wake loss at the further wind turbine; and, transmit the signal indicative of the wind direction determined to result in wake loss at the further wind turbine to the wind turbine.

According to an aspect of the present invention there is provided a wind turbine comprising a controller as defined above.

According to another aspect of the present invention there is provided a wind park comprising a control system as defined above.

According to an aspect of the present invention there is provided a method for controlling a wind turbine of a wind park comprising a plurality of wind turbines. The method comprises retrieving a predefined wake loss control strategy for the wind turbine, the predefined wake loss control strategy being for controlling the wind turbine to perform one or more wake loss control actions as a function of wind direction in the vicinity of the wind turbine, the predefined wake loss control strategy being for controlling operation of the wind turbine to adjust wake generated by the wind turbine at wind directions predicted to result in wake loss at a further wind turbine of the plurality of wind turbines. The method comprises receiving, from the further wind turbine, a signal indicative of a current wake condition, e.g. a full wake condition, at the further wind turbine. The method comprises receiving a signal indicative of current wind direction in the vicinity of the wind turbine. The method comprises determining a difference between a wind direction predicted to result in the current wake condition at the further wind turbine and the current wind direction corresponding to the defined wake condition. The method comprises determining an adjusted wake loss control strategy that is for controlling the wind turbine to perform the one or more wake loss control actions of the predefined wake loss control strategy as a function of wind direction offset by the determined difference. The method comprises controlling the wind turbine in accordance with the adjusted wake loss control strategy.

### BRIEF DESCRIPTION OF THE DRAWINGS

Examples of the invention will now be described with reference to the accompanying drawings, in which:
Figure 1 schematically illustrates a wind park including a plurality of wind turbines in accordance with an aspect of the present invention;
Figure 2(a) schematically illustrates wake generated downstream of one of the wind turbines of Figure 1 when the wind turbine is aligned with the incoming wind direction, and Figure 2(b) schematically illustrates the generated wake when the wind turbine of Figure 2(a) is misaligned relative to the incoming wind direction;
Figure 3 is an illustrative plot of estimated yaw moment against absolute wind direction for one of the wind turbines of Figure 1 downstream of another of the wind turbines of Figure 1 that generates wake downstream thereof;
Figure 4 schematically illustrates one of the downstream wind turbines of Figure 1 experiencing the effects of wake generated by another of the wind turbine of Figure 1 upstream thereof, wherein: Figure 4(a) shows the downstream wind turbine in a full wake condition; Figure 4(b) shows the downstream wind turbine in a left half plane wake condition; and, Figure(c) shows the downstream wind turbine in a right half plane wake condition;
Figure 5 shows a schematic representation of a controller, in accordance with an aspect of the invention, of one of the wind turbines of Figure 1 that generates wake downstream thereof; and,
Figure 6 shows the steps of method performed by the controller of Figure 5 in accordance with an aspect of the invention.

### DETAILED DESCRIPTION

The invention provides a method and system that monitors wake loss at one or more downstream wind turbines relative to an upstream wind turbine in a wind park, and controls the upstream wind turbine based on the monitored wake loss at these downstream turbines, e.g. by performing wake steering of the upstream turbine. In particular, the effect that wake generated by the upstream wind turbine has on downstream wind turbines is monitored, e.g. the loading experienced by one or more components of the downstream turbines in certain wind conditions (in particular, for certain wind directions), and appropriate control of the upstream turbine to mitigate these effects for certain wind directions may be performed, e.g. in a manner that maximises power output of the wind park as a whole. This is in contrast to some known wake steering approaches, in which only wind conditions at the (upstream) wind turbine to be controlled are taken into account when determining how to control the wind turbine, or only wind conditions at one or more downstream turbines are taken into account.

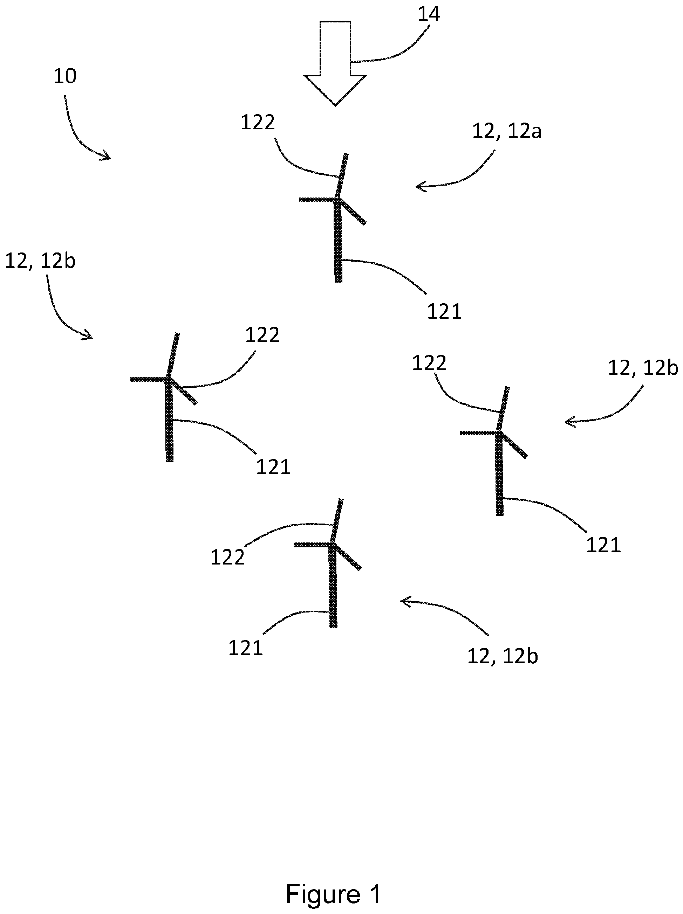

Figure 1 shows a schematic illustration of a wind park or wind farm 10 comprising a plurality of wind turbines 12. Each wind turbine 12 includes a tower 121, a nacelle disposed at the apex of, or atop, the tower, and a rotor operatively coupled to a generator housed inside the nacelle. In addition to the generator, the nacelle houses other components required for converting wind energy into electrical energy and various components needed to operate, control, and optimise the performance of the wind turbine 12. The rotor of the wind turbine 12 includes a central hub and three rotor blades 122 that project outwardly from the central hub.

Each wind turbine 12 includes a control system or controller (not shown in Figure 1). The controller may be placed inside the nacelle, in the tower or distributed at a number of locations inside (or externally to) the turbine 12 and communicatively connected to one another. In addition, the wind park 10 may include a (central) controller that is communicatively connected to the wind turbine controllers.

The rotor blades 122 are pitch-adjustable. The rotor blades 122 can be adjusted in accordance with a collective pitch setting, where each of the blades are set to the same pitch value. In addition, the rotor blades 122 are adjustable in accordance with individual pitch settings, where each blade 122 may be provided with an individual pitch setpoint. The control system / controller of the respective wind turbine 12 may determine collective and/or individual pitch settings and output / transmit control signals to appropriate actuators of the wind turbine 12 to actuate pitch bearings of the wind turbine 12 to control the pitch angle of the rotor blades 122 in accordance with the determined pitch settings.

Each wind turbine 12 may be configured to adjust a yaw angle, e.g. relative to the wind in the vicinity of the respective wind turbine 12. In particular, each turbine 12 may comprise a yaw system between the tower 121 and nacelle, which allows for rotational motion of the nacelle (and attached components, including the rotor and rotor blades 122) relative to the tower in order to adjust a yaw angle of the wind turbine 12 relative to the wind, i.e. rotation about a tower axis of the turbine 12. The control system / controller of the respective wind turbine 12 may determine a desired yaw angle for the wind turbine 12, and output a control signal to control a yaw drive mechanism of the turbine 12 to rotate the nacelle relative to the tower 121 via the yaw bearing in accordance with the desired yaw angle.

Wake steering may also be obtained by tilt moment control where by means of individual pitching generates a tilt moment on the rotor which may direct the wake in a vertical direction.

Each of the wind turbines 12 in the wind park 10 is configured to capture energy from the wind flowing past, and to convert the captured wind energy into electrical power, e.g. to be provided to the electrical grid. It is generally desired to maximise the amount of wind energy captured by a wind turbine in order to maximise the amount of power the turbine generates. Each wind turbine 12 monitors the wind conditions in its vicinity, and controls/adjusts one or more components of the wind turbine 12 as appropriate to maximise the captured wind energy based on the monitored wind conditions. Each wind turbine 12 may include one or more sensors for measuring one or more aspects of the wind conditions in the vicinity of the turbine 12, e.g. wind speed, wind direction, etc. For instance, each turbine 12 may include one or more accelerometers for this purpose, e.g. located in the nacelle.

Each wind turbine 12 may be controlled to balance maximising the captured energy / power production of the turbine against (minimising) the loading experienced by one or more components of the turbine 12. If the loading, e.g. extreme or fatigue loading, experienced by the wind turbine components is too high then this can result in reduced lifespan or even failure of the components. Each turbine 12 may include sensors for monitoring the loading of different wind turbine components. For instance, each turbine 12 may include blade load sensors placed at, or in the vicinity of, a root end of each blade 122 in a manner such that the sensor detects loading in the blade 122. Depending on the placement and the type of sensor, loading may be detected in the flap (flapwise) direction (in/out of plane) or in the edge (edgewise) direction (in-plane). Such sensors may be strain gauge sensors or optical Bragg-sensors, for instance.

In general, in order to maximise the amount of energy that a wind turbine captures from the wind, the wind turbine may be controlled to be aligned with the incoming wind direction. That is, the wind turbine may be controlled so that the rotor or nacelle points directly into the incoming or oncoming wind. A difference between the wind direction and the nacelle/rotor direction - i.e. where the wind turbine is misaligned with the wind direction - may be referred to as a yaw error.

Figure 1 schematically illustrates a direction 14 of wind flow in the wind park 10. As the wind flows past a first one of the turbines 12a in the wind park 10, wake is generated downstream of the wind turbine 12a. This means that wind flow downstream of the wind turbine 12a is perturbed or disturbed relative to upstream of the wind turbine 12a, resulting in a reduction in the speed of the wind flow and/or an increase in the turbulence of the wind flow.

Depending on the positioning of the other wind turbines 12b in the wind park 10 relative to the (first) wind turbine 12a, the wind flow past one or more of the other wind turbines 12b may include wake effects caused by the wind flow past the first wind turbine 12a. The wind turbine that generates / causes the wake may be referred to as the upstream or upwind wind turbine 12a, and the one or more wind turbines that experience effects of the generated wake may be referred to as downstream or downwind wind turbines 12b.

Upstream wind turbines tend to produce more energy than downstream wind turbines because of the effects of wake on the downstream wind turbines from the upstream wind turbines. In particular, wake effects from upstream wind turbines results in reduced wind speed and increased turbulence in the vicinity of the downstream wind turbines relative to the upstream wind turbines. It is known to control an upstream wind turbine to adjust generated wake in a manner that is intended to reduce the effects of the wake on one or more wind turbines downstream of the upstream wind turbine. In particular, so-called wake steering may be performed to change a direction of generated wake, for instance. This may be performed by misaligning the upstream wind turbine relative to the incoming wind direction.

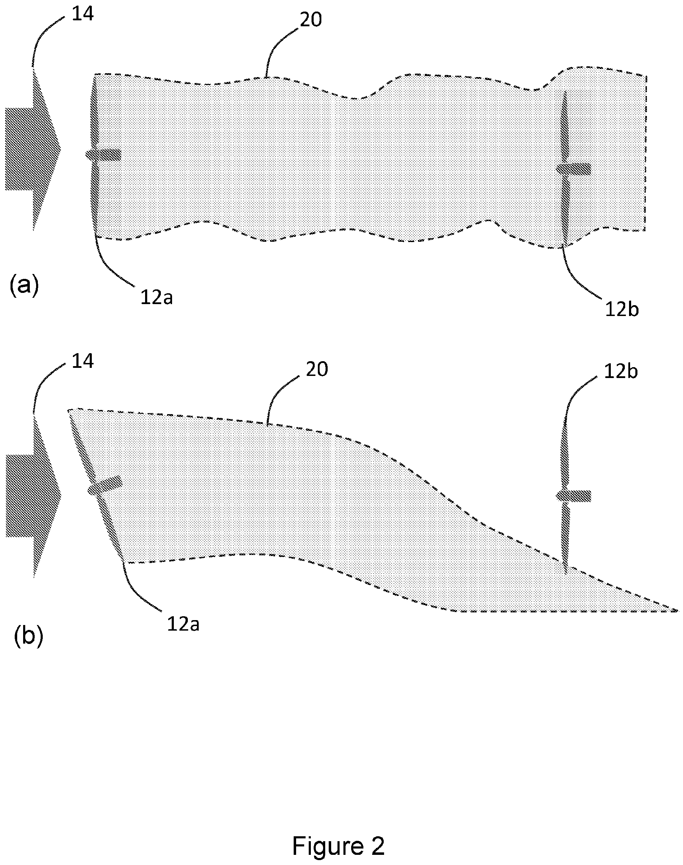

Figure 2 schematically illustrates how wake steering may be utilised to adjust generated wake. In particular, Figure 2(a) shows a case in which the upstream wind turbine 12a is aligned with the incoming wind direction 14. In this case, it is seen that the wake 20 generated downstream of the upstream wind turbine 12a is directed towards another wind turbine 12b downstream of the upstream wind turbine 12a. As the downstream wind turbine 12b experiences the effects of the generated wake 20, then this reduces the amount of wind energy that may be captured by the downstream wind turbine 12b. Figure 2(b) shows a case in which the upstream wind turbine 12a is misaligned relative to the incoming wind direction 14, e.g. a yaw angle of the upstream wind turbine 12a is adjusted relative to Figure 2(a). It is seen that this changes the direction of the generated wake 20 such that the downstream wind turbine 12b does not experience the effects of the generated wake 20, or at least experiences reduced effects thereof.

Known methods for performing wake steering may be based on monitored wind conditions in the vicinity of the (upstream) wind turbine to be controlled, and on retrievable information relating to the layout of a wind park, i.e. the positioning of wind turbines relative to one another in the wind park. For instance, for a particular measured - or otherwise ascertained, e.g. estimated - wind direction in the vicinity of the upstream wind turbine to be controlled, it may be predicted that wake in a certain direction is generated downstream of the wind turbine, e.g. when the wind turbine is aligned with the wind direction. If the predicted wake direction is such that its effects are expected to be experienced by another wind turbine downstream of the upstream wind turbine (based on the wind park layout information), then one or more wake control actions, e.g. wake steering, of the upstream wind turbine may be performed to adjust a direction of the wake generated by that wind turbine.

However, such known methods may not always be able to accurately predict when generated wake effects will be experienced by downstream wind turbines and be detrimental to the amount of wind energy that may be captured by the downstream turbines. This may be for several reasons. For instance, a layout of the wind park available to the upstream wind turbine may not be accurate, i.e. the relative positioning of the wind turbines in the wind park may not be accurate, such that it is incorrectly predicted when generated wind flow is directed towards one or more downstream turbines. Also, other aspects of the prevailing wind conditions - e.g. wind speed, level of turbulence, wind shear/veer, atmospheric stability - can influence wake generated downstream of a wind turbine, and how it develops. Furthermore, different aspects of a wind park - e.g. the terrain and/or vegetation between different turbines - can influence the development and path of the wake. The wind direction measurement, and/or a positioning (e.g. yaw angle) of the rotor or nacelle of an upstream turbine, that is used to determine and adjust wake may be inaccurate (e.g. if the sensors used to measure these quantities are faulty or incorrectly calibrated), which can also lead to differences between actual and predicted wake effects downstream.

The present invention is advantageous in that it provides a method and controller/system for reducing the wake loss (i.e. the reduction in wind energy capturing efficiency or capability) suffered or experienced by wind turbines in a wind park, in a manner that can increase or maximise overall wind energy capture across a wind park that includes a plurality of wind turbines. In particular, this is achieved by monitoring the (actual) effects of wake generated by an upstream wind turbine on one or more downstream wind turbines, and to use these monitored effects from the downstream turbines to determine how to control the upstream turbine to reduce wake loss experienced at the downstream turbines.

The invention in particular uses the monitored downstream wake effects to offset a (measured or estimated) wind direction at which a control strategy for addressing wake loss, e.g. performing wake steering, is activated at an upstream wind turbine. Specifically, this modifies/adjusts a control strategy of the upstream wind turbine to take into account errors or differences between wind conditions expected or predicted to result in wake loss at downstream wind turbines and wind conditions that actually result in wake loss.

Referring back to Figures 1 and 2, a controller of the upstream wind turbine 12a may be configured to implement a predefined wake loss control strategy as a function of wind direction in the vicinity of the wind turbine 12a. The predefined wake loss control strategy may involve the controller performing one or more control actions to reduce or mitigate wake loss experienced by one or more of the downstream wind turbines 12b at specific monitored wind directions predicted or expected to result in downstream wake loss. For instance, the control actions could include yaw angle control of the upstream turbine 12a to redirect downstream wake away from the downstream turbines 12b. The predefined control strategy may be activated to perform the control actions, e.g. wake steering, for a predefined range or interval of monitored wind directions ('wake sector') deemed to result in wake loss downstream. On the other hand, the predefined control strategy may be deactivated if the monitored wind direction is outside of the predefined range such that no control actions to mitigate wake loss are performed. When the predefined control strategy is not activated (deactivated), the upstream wind turbine 12a may be controlled in accordance with a standard control strategy, e.g. to maximise its power generation, by aligning the wind turbine 12a with the incoming wind direction 14. The predefined wake loss control strategy, i.e. which control actions are performed for which wind conditions, may be determined offline based on historical or experimental data, or in any other suitable manner, e.g. including machine learning methods, such that it is known a priori.

As well as wind direction, the predefined strategy may also take into account (i.e. be a function of) other wind conditions such as wind speed. For instance, even if the wind direction is such that a downstream turbine is predicted to be in the generated wake, if the wind speed is relatively high - in particular, significantly above rated wind speed - then it may not be worth performing wake steering of the upstream turbine as the downstream turbine still be producing rated power.

In order to determine an actual position or direction of wake generated by the upstream wind turbine 12a, one or more aspects of the operation of a downstream wind turbine 12b are monitored. For instance, loading experienced by the rotor blades 122 of the downstream wind turbine 12b may be monitored as a means for detecting wake effects or wake loss experienced by the downstream wind turbine 12b, e.g. blade loading may increase when a wind turbine is operating in waked flow.

In some examples, a parameter indicative of loading imbalance on the downstream turbine rotor may be determined and used as an indicator of wake loss. In one such example, an estimated or measured rotor tilt or yaw moment, e.g. based on blade load sensor signals, may be used to detect wake loss. If there are other factors influencing an imbalance of the rotor loading, then these may be removed, or compensated for, before performing subsequent analysis. For instance, if a wind turbine has individual pitch control (IPC) active, then the (measured) rotor yaw moment may be compensated to account for the correction of imbalances performed by the IPC.

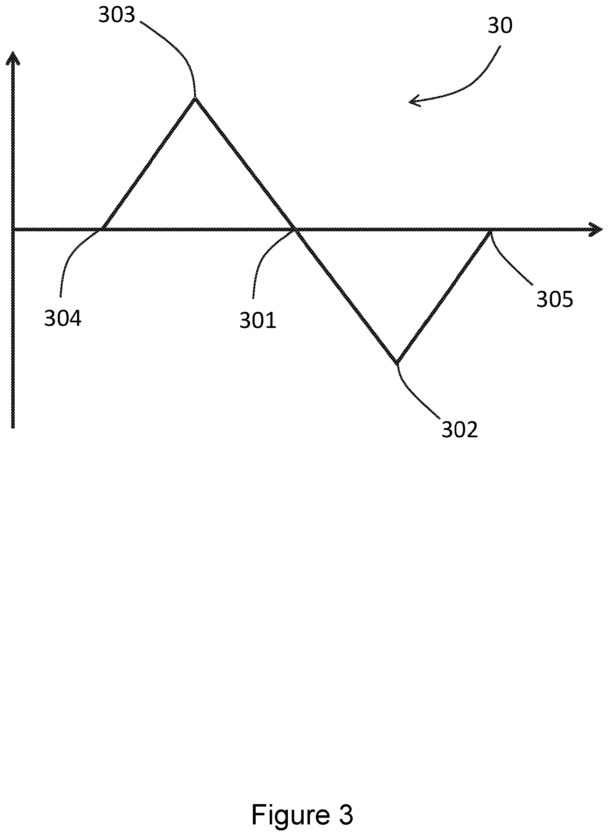

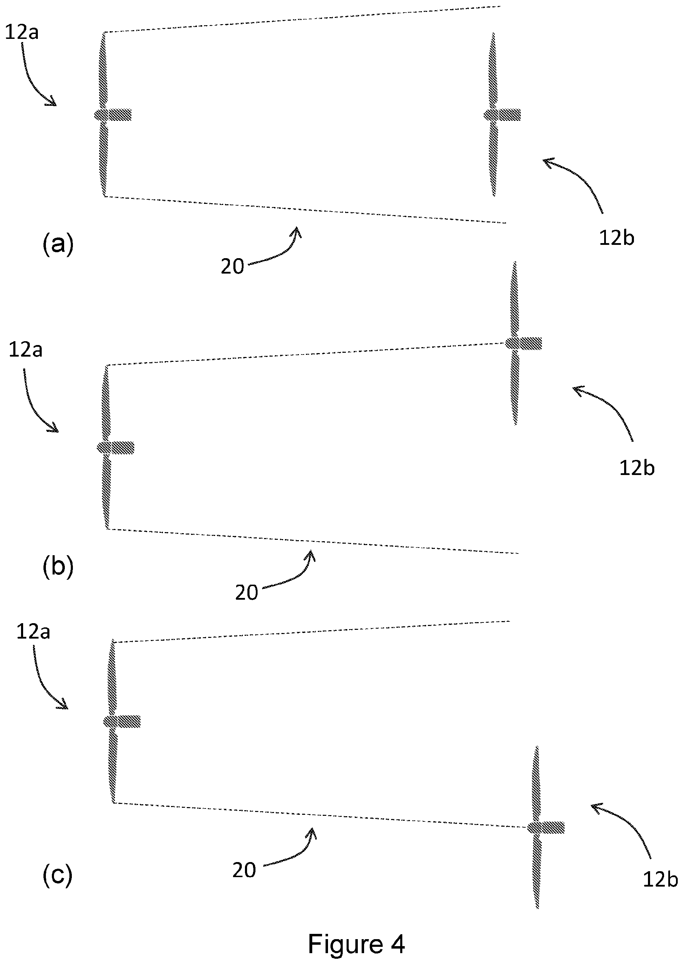

Figure 3 shows an illustrative plot 30 of rotor yaw moment (along the y-axis, e.g. in kNm) against absolute wind direction (along the x-axis, in degrees) for a downstream wind turbine 12b that allows detection of a wake condition in which the turbine is operating 12b. With further reference to Figure 4, the rotor yaw moment allows for determination as to whether the downstream wind turbine 12b is in a so-called 'full wake condition', 'left half plane wake condition', 'right half plane wake condition', somewhere between these defined wake conditions, or outside of these wake conditions.

Figure 4(a) schematically illustrates the downstream wind turbine 12b in a full wake condition. In particular, in a full wake condition, the downstream wind turbine 12b is fully in the wake 20 generated by the upstream wind turbine 12a. When this is the case, the blade loading effects caused by the wake at the downstream turbine 12b may substantially balance out (be equal) between left and right sides/halves of the rotor plane such that a yaw moment experienced by the rotor of the downstream turbine 12b is substantially zero, corresponding to the full wake condition point 301 in Figure 3.

Figure 4(b) schematically illustrates the downstream wind turbine 12b in a left half plane wake condition. In particular, in a left half plane wake condition, (only) a left half of the rotor plane of the downstream turbine 12b - e.g. defined as the swept area of the rotor blades 122 of the turbine 12b - is in (or experiences the effects of) the wake 20 generated by the upstream wind turbine 12a. When this is the case, this may result in a maximum level/amount of imbalance in the blade loading between the left and right halves of the rotor plane such that a magnitude of a yaw moment experienced by the rotor of the downstream turbine 12b is at its maximum. This corresponds to the left half plane wake condition point 302 in Figure 3.

Figure 4(c) schematically illustrates the downstream wind turbine 12b in a right half plane wake condition. This corresponds to the left half plane wake condition except that (only) the right half of the rotor plane is in the wake 20 generated by the upstream wind turbine 12a. This corresponds to the right half plane wake condition point 303 in Figure 3.

Referring to Figure 3 in conjunction with Figure 4, it will be understood that the points 304, 305 of the estimated yaw moment plot 30 correspond to the wind directions at which the downstream turbine 12b is just outside of the wake 20 generated by the upstream turbine 12a, i.e. the point at which the generated wake does not impact the estimated or measured yaw moment. It may be that it is desired for a wake loss control strategy of the upstream turbine 12a to activate / deactivate at wind directions 304, 305; however, the activation / deactivation wind direction can be set at any suitable wind directions based on the estimated yaw moment. For instance, it may be desired that a downstream turbine is sufficiently in the generated wake before activating an upstream control strategy to mitigate the effects of downstream wake loss. It may also be desired to activate and deactivate the wake loss control strategy at different wind directions, i.e. to introduce hysteresis into the control strategy. This can guard against repeated activation and deactivation cycles of the control strategy, and can also guard against deactivation of the control strategy causing an increase in yaw moment at the downstream turbine (as the wake may be shifted back towards the directions of the downstream turbine).

Although the above is described with reference to monitoring a parameter indicative of loading imbalance - and, in particular, rotor yaw moment - to determine a wind direction resulting in a defined wake condition, it will be understood that different parameters of the wind turbine may be considered for this purpose. For instance, parameters indicative of turbulence, certain frequency content in fore-aft acceleration of the wind turbine (e.g. 3P content), tilt/yaw controller pitch actuation (at 1P), side-side acceleration of the wind turbine tower or nacelle, and/or blade edge or flap moment acceleration/variation, may be used.

In order to determine the (actual) wind direction in which a downstream wind turbine 12b is in, or experiences, a particular or defined wake condition, a training period of wind turbine operation may be undertaken in which the wind turbines 12 are operated for a plurality of different wind directions. During the training period, the wind turbines 12 may be operated in accordance with standard control strategies, e.g. to maximise power production. In particular, the upstream wind turbine 12a may not perform any wake steering or other wake loss control actions during the training period.

During the training period, a downstream wind turbine 12b - for instance, a controller of the downstream turbine 12b - may monitor the wind directions, e.g. using suitable sensors, and monitor a parameter indicative of wake loss, such as estimated a yaw moment (e.g. based on blade load sensor signals) at each wind direction. The downstream turbine 12b may use this to determine an absolute wind direction that corresponds to the downstream turbine 12b being in, or experiencing, a particular or defined wake condition, typically a full wake condition.

A further training period in which one or more wake control actions are implemented by the upstream wind turbine 12a may be performed subsequently, e.g. to ensure that the desired effects of reduced wake loss are being achieved at the downstream turbines 12b.

In one example, the downstream turbine 12b determines a wind direction at which the turbine 12b is in a full wake condition, e.g. the wind direction corresponding to point 301 in Figure 3. For instance, this may be ascertained by considering the rotor yaw moment for (slightly) smaller and larger wind directions than the one appearing to correspond to the centre 301, or by observing the (unique) pattern of a positive yaw moment followed by zero yaw moment and a negative yaw moment. The centre of wake will also correspond to lower power production, and so other sensor data indicative of downstream wind turbine operation may be used to ascertain where wind direction corresponding to the wake centre 301 is.

The determined wind direction(s) corresponding to a (or each) defined wake condition, e.g. a full wake condition, may be communicated from the downstream wind turbine 12b to the upstream wind turbine 12a. The upstream wind turbine 12a then uses this determined wind direction to adjust a wake loss control strategy of the upstream turbine 12a to better mitigate the downstream wake loss effects of the wake generated by the upstream turbine 12a, as described below.

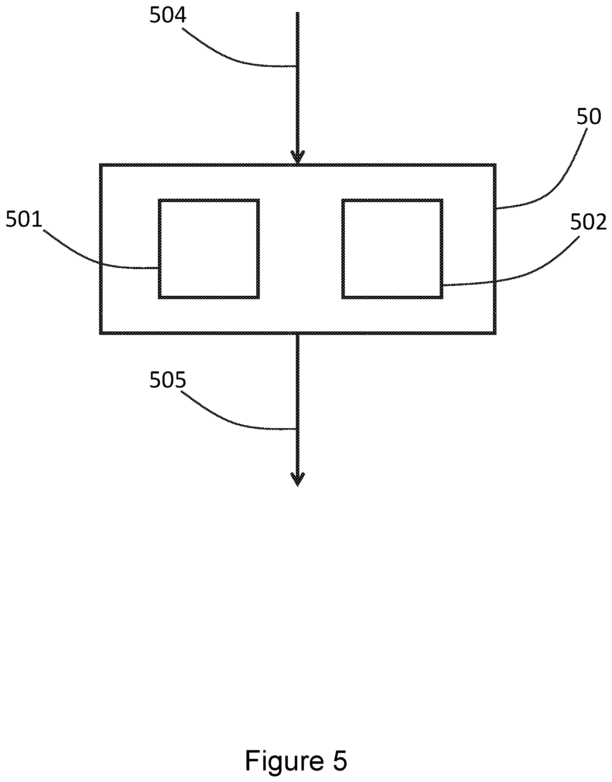

Figure 5 schematically illustrates elements of a controller 50 of the upstream wind turbine 12a. The controller 50 may be located in a nacelle of the turbine 12a, for instance. The controller 50 includes one or more computer processors 501, and may include a data storage or memory 502. The controller 50 is configured to receive input signals 504, e.g. via an input of the controller 50. The input signals 504 can include a signal indicative of the determined wind direction(s) described above from one or more of the downstream wind turbines 12b. The controller 50 is configured to output/transmit control signals 505, via an output of the controller 50. The output signals 505 can include a correction to be applied to the predefined wake control actions/strategy, e.g. wake steering. The output signals 505 can include one or more control signals for controlling operation of the wind turbine 12a, e.g. controlling pitch actuators to adjust the rotor blade pitch in accordance with determined pitch reference values, and/or controlling rotor or generator speed in accordance with determined speed references.

The described controller 50 may be in the form of any suitable computing device, for instance one or more functional units or modules implemented on one or more computer processors. Such functional units may be provided by suitable software running on any suitable computing substrate using conventional or customer processors and memory. The one or more functional units may use a common computing substrate (for example, they may run on the same server) or separate substrates, or one or both may themselves be distributed between multiple computing devices. A computer memory may store instructions for performing the methods performed by the controller, and the processor(s) may execute the stored instructions to perform the method.

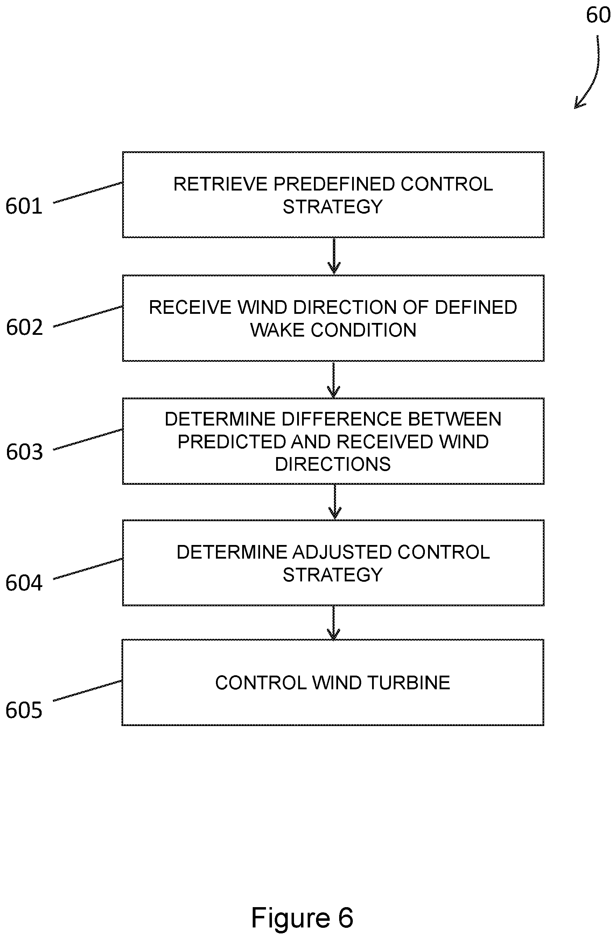

Figure 6 summarises the steps of a method 60 performed by the controller 50 for controlling the wind turbine 12a in accordance with examples of the present invention. It will be understood, however, that one or more of the method steps shown in Figure 6, and/or some or all other steps that may form part of the overall method in some examples, may be performed remote from the upstream wind turbine 12a, e.g. by a controller of one or more of the downstream wind turbines 12b, and/or by a controller of the wind park 10.

At step 601 of the method 60, a predefined wake control strategy for the upstream wind turbine 12a of the wind park 10 is retrieved, for instance from the data memory 502. The predefined wake control strategy is for controlling the upstream wind turbine 12a to perform wake control actions as a function of wind direction in the vicinity of the wind turbine 12a. Typically, the wind direction used here is the absolute wind direction (rather than a relative wind direction). In particular, the predefined wake control strategy is for controlling operation of the upstream wind turbine 12a to adjust wake generated by the wind turbine 12a at wind directions predicted, expected or estimated to result in wake at one or more further wind turbines 12b of the wind park 10 downstream or downwind of the upstream wind turbine 12a.

As outlined above, the predefined wake loss control strategy may activate for certain wind directions (and optionally other wind conditions, such as wind speed), i.e. wind directions predicted to result in wake loss being experienced at one or more of the downstream turbines 12b (in the absence of wake loss control being activated). In particular, a specific wind direction may be predicted or expected to result in a defined wake condition downstream (in the predefined wake loss control strategy). As such, the predefined strategy may take into account relative positioning, e.g. GPS positioning, of the downstream turbines 12b relative to the upstream turbine 12a.

The predefined wake loss control strategy may involve controlling the upstream turbine 12a to change from being operated in accordance with a (standard) control strategy to optimise power production (optionally while minimising component loading, or keeping component loading within allowable limits) at the upstream turbine 12a, to being operated to take into account how wake generated by the upstream turbine 12a is expected to affect operation at one or more of the downstream turbines 12b. For instance, operation in accordance with a standard control strategy may involve aligning (the nacelle and/or rotor of) the upstream wind turbine 12a with the incoming wind direction in order to maximise wind energy capture. On the other hand, operation in accordance with the predefined wake loss control strategy may involve misaligning the upstream wind turbine 12a relative to the incoming wind direction for certain wind directions expected to cause wake loss at one or more downstream turbines 12b so as to redirect the generated wake in a manner that reduces the wake loss at said downstream turbines 12b.

At step 602 of the method 60, the controller 50 receives a signal 504 indicative of a wind direction determined to result in a defined wake condition at one or more (further) wind turbines 12b of the wind park 10, downstream of the upstream wind turbine 12a. In the described example, the signal 504 is received by the controller 50 of the upstream turbine 12a from (a controller of) the or each downstream wind turbine 12b.

As outlined above, the downstream turbine 12b may determine the wind direction that results in the defined wake condition during a training period, e.g. by monitoring/analysing one or more parameters indicative of wake loss (e.g. estimated rotor yaw moments) for different wind directions. Either way, the determination of the wind direction that results in, or corresponds to, the defined wake condition may be performed when the upstream wind turbine 12a is not performing the one or more wake loss control actions. The wind direction measurement or estimation for this purpose may be made at the upstream turbine 12a, downstream turbine 12b, or at the level of the wind park 10.

At step 603 of the method 60, the controller 50 determines a difference between a wind direction predicted or expected (at the upstream wind turbine 12a) to result in the defined wake condition at one or more of the downstream (further) wind turbines 12b, and the wind direction determined to result in the defined wake condition received from the downstream wind turbine(s) 12b. The defined wake condition may be a full wake condition at the downstream turbine 12b, or any other suitable wake condition (e.g. as outlined above). For instance, the determined wind direction may be a wind direction in which one of the downstream wind turbines 12b is at a centre of the wake generated by the upstream wind turbine 12a.

Although in the described example the wind direction determined to result in a defined wake condition is transmitted from the downstream (further) wind turbine 12b to the controller 50 of the upstream turbine 12a, in different examples the downstream turbine 12b may simply transmit an indication of the (current) wake condition at the downstream turbine 12a (and not a wind direction indicative of the wake condition). The indication may be in the form of acquired sensor data for determining the parameter (e.g. rotor yaw moment) indicative of wake loss. The upstream turbine controller 50 may then determine the difference between a wind direction that is expected to result in the current wake condition and a current (measured) wind direction that corresponds to the current wake condition (the indication of which is received from the downstream turbine 12b).

At step 604 of the method 60, the controller 50 determines an adjusted or modified wake loss control strategy that is for controlling the upstream wind turbine 12a to perform the one or more wake loss control actions of the predefined wake loss control strategy as a function of wind direction offset by the determined difference. That is, the wind direction at which wake loss control actions are performed or implemented is offset to 'centre' the wake loss controller, i.e. to account for any errors in the sensor data or other data that the controller uses to perform wake loss control, such as wake model data used to set/determine the predefined control actions/settings. This may be regarded as, instead of the wake loss control strategy being a function of absolute wind direction, it is a function of relative wind direction (relative to the downstream full wake condition position, for instance). The presently-described method is agnostic to the source of such errors; instead, the method aims to identify and correct the errors, irrespective of their source.

The wake loss control actions of the adjusted wake loss control strategy are the same as those in the predefined wake loss control strategy; however, the wind direction at which a given control action is implemented in the adjusted strategy is offset from wind direction at which it is implemented in the predefined strategy by the determined difference outlined above. For instance, determining the adjusted strategy may include offsetting a wind direction at which the predefined wake control strategy is activated (e.g. to perform wake steering) by the determined difference. It is envisioned that in some examples, the offset need not correspond exactly to the determined difference, but will simply be determined based on the determined difference, e.g. the offset may be less than the determined difference. The offset may also be determined or set based on one or more further operational variables, e.g. wind speed, turbulence intensity, etc.

At step 605 of the method 60, the controller 50 controls the upstream wind turbine 12a in accordance with the adjusted wake loss control strategy. This may include receiving a measured wind direction in the vicinity of the upstream wind turbine 12a. The adjusted wake control strategy to perform the one or more control actions may then be activated if the measured wind direction offset by the determined difference is within a predefined range of wake control activation wind directions. For instance, in one illustrative example, the range of wind directions may correspond to the range between the wind directions at points 304 and 305 in Figure 3; however, it will be understood that different ranges may be selected as appropriate. The control actions performed may vary depending on where in the predefined range the wind direction is. For instance, gain scheduling may be used depending on wind direction and/or other parameters such as wind speed.

The control actions may include any suitable way of controlling operation of the upstream wind turbine 12a to control/adjust the wake generated downstream thereof. For instance, the control actions can include performing yaw control to rotate the nacelle and rotor of the upstream 12a wind turbine about a yaw angle relative to the wind turbine tower to adjust a (lateral) direction of wake generated by the upstream wind turbine 12a. The control action may also include performing tilt moment control to generate a tilt moment about a tilt axis relative to the tower, e.g. to direct generated wake towards the ground. The control actions may also include performing collective and/or individual pitch control of the wind turbine rotor blades 122 in a manner that changes the generated wake as desired.

The wake loss control strategy may be configured to perform control actions - based on current wind conditions, including wind direction - that adjusts operation of the upstream wind turbine 12a to reduce wake loss at one or more downstream turbines 12b in a manner that results in an overall increase of power production of the wind park 10. In particular, the aim of the control actions could be to minimise the effects of the generated wake at a downstream turbine, e.g. to achieve substantially zero rotor yaw moment (except when this corresponds to the centre of the wake).

The steps of the described method may be repeated to update or further adjust the wake loss control strategy in an iterative manner. For instance, if the source of the wake loss controller error is related to a faulty sensor providing wind direction measurements that become more inaccurate over time, then the offset applied to the wind direction for implementing the wake loss control strategy needs to be updated to ensure that power production across the wind park continues to be optimised/maximised. The described method may therefore be repeated at any suitable time interval.

Many modifications may be made to the described examples without departing from the scope of the appended claims.

In the described examples, the (upstream) wind turbine to be controlled receives data indicative of wake conditions for a certain wind direction from a single downstream wind turbine. It will be understood, however, that the upstream wind turbine may receive wake condition data from a plurality of downstream wind turbines in a wind park. This data may be combined to determine appropriate wake steering control of the upstream wind turbine that will result in the greatest increase in energy capturing efficiency of the wind park as a whole.

In the described examples, a controller of the (upstream) wind turbine to be controlled determines the wind direction offset (e.g. the full wake direction offset) to determine the adjusted wake control strategy. However, it will be appreciated that this determination may be performed by a controller of the downstream wind turbine (or one of the wind turbines) in the wake of the upstream controller, and then communicated to (the controller of) the upstream wind turbine. Alternatively, this determination may be made by a controller of the wind park, for instance, and then communicated to the upstream wind turbine.

In some examples, the wind direction offset may be used for the purposes of fault detection. For instance, if a plurality of wind turbines each determine that a given turbine is offset from predefined settings then it may be that the location coordinates associated with the given turbine (as built) may be different from the actual location coordinates (as soled/designed). In other examples, if the determined/detected full wake position changes over time then: if the change is relatively abrupt, this could indicate incorrect parameter handling of the turbine during servicing; whereas, if the change is relative gradual, this could indicate that (growing) vegetation is changing the flow in the wind park.

## Claims

1. A method for controlling a wind turbine of a wind park (10) comprising a plurality of wind turbines (12), the method comprising:
retrieving (601) a predefined wake loss control strategy for the wind turbine (12a), the predefined wake loss control strategy being for controlling the wind turbine to perform one or more wake loss control actions as a function of wind direction (14) in the vicinity of the wind turbine, the predefined wake loss control strategy being for controlling operation of the wind turbine to adjust wake (20) generated by the wind turbine at wind directions predicted to result in wake loss at a further wind turbine (12b) of the plurality of wind turbines;
receiving (602), from the further wind turbine, a signal indicative of a wind direction determined to result in a defined wake condition at the further wind turbine;
determining (603) a difference between a wind direction predicted to result in the defined wake condition at the further wind turbine and the received wind direction determined to result in the defined wake condition;
determining (604) an adjusted wake loss control strategy that is for controlling the wind turbine to perform the one or more wake loss control actions of the predefined wake loss control strategy as a function of wind direction offset by the determined difference; and,
controlling (605) the wind turbine in accordance with the adjusted wake loss control strategy.

2. A method according to Claim 1, wherein the defined wake condition is a full wake condition (301).

3. A method according to Claim 1 or Claim 2, wherein the received wind direction is a wind direction in which the further wind turbine is at a centre of the wake generated by the wind turbine.

4. A method according to any previous claim, wherein determining the adjusted wake loss control strategy comprises offsetting a wind direction at which the predefined wake loss control strategy is activated by the determined difference.

5. A method according to any previous claim, the method comprising, at the further wind turbine: determining the wind direction resulting in the defined wake condition at the further wind turbine; and, transmitting the signal indicative of the wind direction determined to result in the defined wake condition at the further wind turbine to the wind turbine.

6. A method according to Claim 5, wherein the wind direction resulting in the defined wake condition at the further wind turbine is determined when the wind turbine is not performing the one or more wake loss control actions.

7. A method according to Claim 5 or Claim 6, wherein the wind direction resulting in the defined wake condition at the further wind turbine is determined during a training period in which the plurality of wind turbines of the wind park are operated for a plurality of different wind directions.

8. A method according to any of Claims 5 to 7, wherein determining the wind direction resulting in the defined wake condition comprises, for a plurality of different wind directions: receiving sensor signals from one or more sensors of the further wind turbine; and, determining a parameter indicative of loading imbalance on a rotor of the further wind turbine based on the received sensor signals.

9. A method according to Claim 8, wherein the sensor signals from one or more sensors are blade load signals from one or more blade load sensors of rotor blades of the further wind turbine, and wherein the parameter is a yaw moment of the rotor of the further wind turbine, determined based on the received blade load signals.

10. A method according to Claim 8 or Claim 9, wherein when the adjusted wake loss control strategy is activated at the wind turbine to perform the one or more wake loss control actions, the method comprises iteratively performing steps of:
at the further wind turbine:
monitoring the parameter indicative of loading imbalance based on sensor signals from the one or more sensors; and;
transmitting a signal indicative of the monitored parameter to the wind turbine; and,
at the wind turbine:
receiving the signal indicative of the monitored parameter from the further wind turbine;
determining a further wind direction offset, based on the received monitored parameter, for reducing the loading imbalance on the rotor of the further wind turbine;
determining a further adjusted wake loss control strategy that is for controlling the wind turbine to perform the one or more wake loss control actions of the predefined wake control strategy as a function of wind direction offset by the determined difference and the further wind direction offset; and,
controlling the wind turbine in accordance with the further adjusted wake loss control strategy.

11. A method according to any previous claim, wherein controlling the wind turbine in accordance with the adjusted wake loss control strategy comprises:
receiving, from one or more wind direction sensors of the wind turbine or wind park, a measured wind direction in the vicinity of the wind turbine; and,
activating the adjusted wake loss control strategy to perform the one or more control actions if the measured wind direction offset by the determined difference is within a predefined range of wake loss control activation wind directions.

12. A method according to any previous claim, wherein the one or more wake loss control actions comprise at least one of:
performing yaw control to rotate a nacelle and rotor of the wind turbine about a yaw angle relative to a tower of the wind turbine to adjust a direction of wake generated by the wind turbine;
performing tilt control to generate a tilt moment about a tilt axis to adjust a direction of the wake generated by the wind turbine;
performing collective pitch control of rotor blades of the wind turbine; and,
performing individual pitch control of the rotor blades.

13. A controller (50) for controlling a wind turbine (12) of a wind park (10) comprising a plurality of wind turbines, the controller being configured to:
Retrieve (601) a predefined wake loss control strategy for the wind turbine (12a), the predefined wake loss control strategy being for controlling the wind turbine to perform one or more wake loss control actions as a function of wind direction (14) in the vicinity of the wind turbine, the predefined wake loss control strategy being for controlling operation of the wind turbine to adjust wake (20) generated by the wind turbine at a wind direction predicted to result in wake loss at a further wind turbine of the plurality of wind turbines;
Receive (602), from the further wind turbine, a signal indicative of a wind direction determined to result in wake loss at the further wind turbine;
Determine (603) a difference between the wind direction predicted to result in wake loss and the received wind direction determined to result in wake loss;
determine (604) an adjusted wake loss control strategy that is for controlling the wind turbine to perform the one or more wake loss control actions of the predefined wake loss control strategy as a function of wind direction offset by the determined difference; and,
control (605) the wind turbine in accordance with the adjusted wake loss control strategy.

14. A control system for the wind park (10) of Claim 13, the control system comprising:
a controller (50) according to Claim 13; and,
a further controller for controlling the further wind turbine, the further controller being configured to:
determine the wind direction resulting in wake loss at the further wind turbine; and,
transmit the signal indicative of the wind direction determined to result in wake loss at the further wind turbine to the wind turbine.

15. A wind turbine (12) comprising a controller (50) according to Claim 13, or a wind park (10) comprising a control system according to Claim 14.

## Patentansprüche

1. Verfahren zum Steuern einer Windkraftanlage eines Windparks (10), welcher eine Vielzahl von Windkraftanlagen (12) umfasst, wobei das Verfahren umfasst:
Abrufen (601) einer vordefinierten Nachlaufverlust-Steuerungsstrategie für die Windkraftanlage (12a), wobei die vordefinierte Nachlaufverlust-Steuerungsstrategie dazu dient, die Windkraftanlage so zu steuern, dass sie eine oder mehrere Nachlaufverlust-Steuerungsaktionen als eine Funktion von Windrichtung (14) in der Nähe der Windkraftanlage durchführt, wobei die vordefinierte Nachlaufverlust-Steuerungsstrategie dazu dient, den Betrieb der Windkraftanlage so zu steuern, dass der von der Windkraftanlage erzeugte Nachlauf (20) bei Windrichtungen angepasst wird, bei welchen vorhergesagt wird, dass sie zu einem Nachlaufverlust bei einer weiteren Windkraftanlage (12b) der Vielzahl von Windkraftanlagen führt;
Empfangen (602) eines Signals von der weiteren Windkraftanlage, welches eine Windrichtung angibt, bei welcher bestimmt wird, dass sie zu einem definierten Nachlaufzustand an der weiteren Windkraftanlage führt;
Bestimmen (603) einer Differenz zwischen einer Windrichtung, bei welcher vorhergesagt wird, dass sie zu dem definierten Nachlaufzustand an der weiteren Windkraftanlage führt, und der empfangenen Windrichtung, bei welcher bestimmt wird, dass sie zu dem definierten Nachlaufzustand führt;
Bestimmen (604) einer angepassten Nachlaufverlust-Steuerungsstrategie, welche dazu dient, die Windkraftanlage so zu steuern, dass sie die eine oder mehreren Nachlaufverlust-Steuerungsaktionen der vordefinierten Nachlaufverlust-Steuerungsstrategie als eine Funktion des Windrichtungsversatzes um die bestimmte Differenz durchführt; und
Steuern (605) der Windkraftanlage in Übereinstimmung mit der angepassten Nachlaufverlust-Steuerungsstrategie.

2. Verfahren nach Anspruch 1, wobei der definierte Nachlaufzustand ein vollständiger Nachlaufzustand (301) ist.

3. Verfahren nach Anspruch 1 oder Anspruch 2, wobei die empfangene Windrichtung eine Windrichtung ist, bei welcher sich die weitere Windkraftanlage im Zentrum des von der Windkraftanlage erzeugten Nachlaufs befindet.

4. Verfahren nach einem vorstehenden Anspruch, wobei Bestimmen der angepassten Nachlaufverlust-Steuerungsstrategie Versetzen einer Windrichtung, bei welcher die vordefinierte Nachlaufverlust-Steuerungsstrategie aktiviert wird, um die bestimmte Differenz umfasst.

5. Verfahren nach einem vorstehenden Anspruch, wobei das Verfahren an der weiteren Windkraftanlage umfasst: Bestimmen der Windrichtung, welche zu dem definierten Nachlaufzustand an der weiteren Windkraftanlage führt; und Übertragen des Signals, welches die Windrichtung angibt, bei welcher bestimmt wird, dass sie zu dem definierten Nachlaufzustand an der weiteren Windkraftanlage führt, an die Windkraftanlage.

6. Verfahren nach Anspruch 5, wobei die Windrichtung, welche zu dem definierten Nachlaufzustand an der weiteren Windkraftanlage führt, bestimmt wird, wenn die Windkraftanlage die eine oder mehreren Nachlaufverlust-Steuerungsaktionen nicht durchführt.

7. Verfahren nach Anspruch 5 oder 6, wobei die Windrichtung, welche zu dem definierten Nachlaufzustand an der weiteren Windkraftanlage führt, während eines Trainingszeitraums bestimmt wird, in welchem die Vielzahl von Windkraftanlagen des Windparks für eine Vielzahl von unterschiedlichen Windrichtungen betrieben wird.

8. Verfahren nach einem der Ansprüche 5 bis 7, wobei Bestimmen der Windrichtung, welche zu dem definierten Nachlaufzustand führt, für eine Vielzahl von unterschiedlichen Windrichtungen umfasst: Empfangen von Sensorsignalen von einem oder mehreren Sensoren der weiteren Windkraftanlage; und Bestimmen eines Parameters, welcher ein Lastungleichgewicht an einem Rotor der weiteren Windkraftanlage angibt, basierend auf den empfangenen Sensorsignalen.

9. Verfahren nach Anspruch 8, wobei die Sensorsignale von einem oder mehreren Sensoren Blattlastsignale von einem oder mehreren Blattlastsensoren von Rotorblättern der weiteren Windkraftanlage sind, und wobei der Parameter ein Giermoment des Rotors der weiteren Windkraftanlage ist, welches basierend auf den empfangenen Blattlastsignalen bestimmt wird.

10. Verfahren nach Anspruch 8 oder Anspruch 9, wobei, wenn die angepasste Nachlaufverlust-Steuerungsstrategie an der Windkraftanlage aktiviert wird, um die eine oder mehreren Nachlaufverlust-Steuerungsaktionen durchzuführen, das Verfahren die iterative Durchführung der folgenden Schritte umfasst:
an der weiteren Windkraftanlage:
Überwachen des Parameters, welcher ein Lastungleichgewicht basierend auf Sensorsignalen von einem oder mehreren Sensoren angibt; und
Übertragen eines Signals, welches den überwachten Parameter angibt, an die Windkraftanlage; und
an der Windkraftanlage:
Empfangen des Signals, welches den überwachten Parameter angibt, von der weiteren Windkraftanlage;
Bestimmen eines weiteren Windrichtungsversatzes basierend auf dem empfangenen überwachten Parameter, um das Lastungleichgewicht am Rotor der weiteren Windkraftanlage zu reduzieren;
Bestimmen einer weiteren angepassten Nachlaufverlust-Steuerungsstrategie, welche dazu dient, die Windkraftanlage so zu steuern, dass sie die eine oder mehreren Nachlaufverlust-Steuerungsaktionen der vordefinierten Nachlaufverlust-Steuerungsstrategie als eine Funktion des Windrichtungsversatzes um die bestimmte Differenz und des weiteren Windrichtungsversatzes durchführt; und
Steuern der Windkraftanlage in Übereinstimmung mit der weiter angepassten Nachlaufverlust-Steuerungsstrategie.

11. Verfahren nach einem vorstehenden Anspruch, wobei Steuern der Windkraftanlage in Übereinstimmung mit der angepassten Nachlaufverlust-Steuerungsstrategie umfasst:
Empfangen einer gemessenen Windrichtung in der Nähe der Windkraftanlage von einem oder mehreren Windrichtungssensoren der Windkraftanlage oder des Windparks; und
Aktivieren der angepassten Nachlaufverlust-Steuerungsstrategie, um die eine oder mehreren Steuerungsaktionen durchzuführen, wenn der gemessene Windrichtungsversatz um die bestimmte Differenz innerhalb eines vordefinierten Bereichs von Windrichtungen zur Aktivierung der Nachlaufverluststeuerung liegt.

12. Verfahren nach einem vorstehenden Anspruch, wobei die eine oder mehreren Nachlaufverlust-Steuerungsaktionen zumindest eines der folgenden umfassen:
Durchführen einer Giersteuerung, um eine Gondel und einen Rotor der Windkraftanlage um einen Gierwinkel relativ zu einem Turm der Windkraftanlage zu drehen, um die Richtung eines von der Windkraftanlage erzeugten Nachlaufs anzupassen;
Durchführen einer Neigungssteuerung, um ein Neigungsmoment um eine Neigungsachse zu erzeugen, um eine Richtung des von der Windkraftanlage erzeugten Nachlaufs anzupassen;
Durchführen einer kollektiven Blattwinkelverstellregelung der Rotorblätter der Windkraftanlage; und
Durchführen einer individuellen Blattwinkelverstellregelung der Rotorblätter.

13. Steuereinheit (50) zum Steuern einer Windkraftanlage (12) eines Windparks (10), welcher eine Vielzahl von Windkraftanlagen umfasst, wobei die Steuereinheit dazu konfiguriert ist:
eine vordefinierte Nachlaufverlust-Steuerungsstrategie für die Windkraftanlage (12a) abzurufen (601), wobei die vordefinierte Nachlaufverlust-Steuerungsstrategie dazu dient, die Windkraftanlage so zu steuern, dass sie eine oder mehrere Nachlaufverlust-Steuerungsaktionen als eine Funktion von Windrichtung (14) in der Nähe der Windkraftanlage durchführt, wobei die vordefinierte Nachlaufverlust-Steuerungsstrategie dazu dient, den Betrieb der Windkraftanlage so zu steuern, dass der von der Windkraftanlage erzeugte Nachlauf (20) bei einer Windrichtung angepasst wird, bei welcher vorhergesagt wird, dass sie zu einem Nachlaufverlust bei einer weiteren Windkraftanlage der Vielzahl von Windkraftanlagen führt;
ein Signal von der weiteren Windkraftanlage zu empfangen (602), welches eine Windrichtung angibt, bei welcher bestimmt wird, dass sie zu einem Nachlaufverlust an der weiteren Windkraftanlage führt;
eine Differenz zwischen der Windrichtung, bei welcher vorhergesagt wird, dass sie zu einem Nachlaufverlust führt, und der empfangenen Windrichtung zu bestimmen (603), bei welcher bestimmt wird, dass sie zu einem Nachlaufverlust führt;
eine angepasste Nachlaufverlust-Steuerungsstrategie zu bestimmen (604), welche dazu dient, die Windkraftanlage so zu steuern, dass sie die eine oder mehreren Nachlaufverlust-Steuerungsaktionen der vordefinierten Nachlaufverlust-Steuerungsstrategie als eine Funktion des Windrichtungsversatzes um die bestimmte Differenz durchführt; und
die Windkraftanlage in Übereinstimmung mit der angepassten Nachlaufverlust-Steuerungsstrategie zu steuern (605).

14. Steuersystem für den Windpark (10) nach Anspruch 13, wobei das Steuersystem umfasst:
eine Steuereinheit (50) nach Anspruch 13; und
eine weitere Steuereinheit zum Steuern der weiteren Windkraftanlage, wobei die weitere Steuereinheit dazu konfiguriert ist:
die Windrichtung zu bestimmen, welche zu einem Nachlaufverlust an der weiteren Windkraftanlage führt; und
das Signal, welches die Windrichtung angibt, bei welcher bestimmt wird, dass sie zu einem Nachlaufverlust an der weiteren Windkraftanlage führt, an die Windkraftanlage zu übertragen.

15. Windkraftanlage (12), umfassend eine Steuereinheit (50) nach Anspruch 13, oder Windpark (10), umfassend ein Steuersystem nach Anspruch 14.

## Revendications

1. Procédé de commande d'une éolienne d'un parc éolien (10) comprenant une pluralité d'éoliennes (12), le procédé comprenant :
la récupération (601) d'une stratégie de commande de perte de sillage prédéfinie pour l'éolienne (12a), la stratégie de commande de perte de sillage prédéfinie étant destinée à commander l'éolienne pour réaliser une ou plusieurs actions de commande de perte de sillage en fonction de la direction de vent (14) à proximité de l'éolienne, la stratégie de commande de perte de sillage prédéfinie étant destinée à commander le fonctionnement de l'éolienne pour ajuster le sillage (20) généré par l'éolienne à des directions de vent prédites comme entraînant une perte de sillage au niveau d'une autre éolienne (12b) de la pluralité d'éoliennes ;
la réception (602), en provenance de l'autre éolienne, d'un signal indiquant une direction de vent déterminée comme entraînant une condition de sillage définie au niveau de l'autre éolienne ;
la détermination (603) d'une différence entre une direction de vent prédite comme entraînant la condition de sillage définie au niveau de l'autre éolienne et la direction de vent reçue déterminée comme entraînant la condition de sillage définie ;
la détermination (604) d'une stratégie de commande de perte de sillage ajustée qui est destinée à commander l'éolienne pour effectuer les une ou plusieurs actions de commande de perte de sillage de la stratégie de commande de perte de sillage prédéfinie en fonction d'un décalage de direction de vent par la différence déterminée ; et
la commande (605) de l'éolienne conformément à la stratégie de commande de perte de sillage ajustée.

2. Procédé selon la revendication 1, dans lequel la condition de sillage définie est une condition de sillage complet (301).

3. Procédé selon la revendication 1 ou la revendication 2, dans lequel la direction de vent reçue est une direction de vent dans laquelle l'autre éolienne est au centre du sillage généré par l'éolienne.

4. Procédé selon une quelconque revendication précédente, dans lequel la détermination de la stratégie de commande de perte de sillage ajustée comprend le décalage d'une direction de vent à laquelle la stratégie de commande de perte de sillage prédéfinie est activée par la différence déterminée.

5. Procédé selon une quelconque revendication précédente, le procédé comprenant, au niveau de l'autre éolienne : la détermination de la direction de vent entraînant la condition de sillage définie au niveau de l'autre éolienne ; et la transmission du signal indiquant la direction de vent déterminée comme entraînant la condition de sillage définie au niveau de l'autre éolienne à l'éolienne.

6. Procédé selon la revendication 5, dans lequel la direction de vent entraînant la condition de sillage définie au niveau de l'autre éolienne est déterminée lorsque l'éolienne n'effectue pas les une ou plusieurs actions de commande de perte de sillage.

7. Procédé selon la revendication 5 ou la revendication 6, dans lequel la direction de vent entraînant la condition de sillage définie au niveau de l'autre éolienne est déterminée pendant une période d'entraînement au cours de laquelle la pluralité d'éoliennes du parc éolien sont exploitées pour une pluralité de directions de vent différentes.

8. Procédé selon l'une quelconque des revendications 5 à 7, dans lequel la détermination de la direction de vent entraînant la condition de sillage définie comprend, pour une pluralité de directions de vent différentes : la réception de signaux de capteur provenant d'un ou plusieurs capteurs de l'autre éolienne ; et la détermination d'un paramètre indicatif d'un déséquilibre de charge sur un rotor de l'autre éolienne sur la base des signaux de capteur reçus.

9. Procédé selon la revendication 8, dans lequel les signaux de capteur provenant d'un ou plusieurs capteurs sont des signaux de charge de pale provenant d'un ou plusieurs capteurs de charge de pale de pales de rotor de l'autre éolienne, et dans lequel le paramètre est un moment de lacet du rotor de l'autre éolienne, déterminé sur la base des signaux de charge de pale reçus.

10. Procédé selon la revendication 8 ou la revendication 9, dans lequel, lorsque la stratégie de commande de perte de sillage ajustée est activée au niveau de l'éolienne pour effectuer les une ou plusieurs actions de commande de perte de sillage, le procédé comprend la réalisation itérative des étapes suivantes :
au niveau de l'autre éolienne :
la surveillance du paramètre indiquant un déséquilibre de charge sur la base de signaux de capteur provenant des un ou plusieurs capteurs ; et
la transmission d'un signal indiquant le paramètre surveillé à l'éolienne ; et au niveau de l'éolienne :
la réception du signal indiquant le paramètre surveillé provenant de l'autre éolienne ;
la détermination d'un autre décalage de direction de vent, sur la base du paramètre surveillé reçu, pour réduire le déséquilibre de charge sur le rotor de l'autre éolienne ;
la détermination d'une autre stratégie de commande de perte de sillage ajustée qui est destinée à commander l'éolienne pour effectuer les une ou plusieurs actions de commande de perte de sillage de la stratégie de commande de sillage prédéfinie en fonction du décalage de direction de vent par la différence déterminée et de l'autre décalage de direction de vent ; et
la commande de l'éolienne conformément à l'autre stratégie de commande de perte de sillage ajustée.

11. Procédé selon une quelconque revendication précédente, dans lequel la commande de l'éolienne conformément à la stratégie de commande de perte de sillage ajustée comprend :
la réception, à partir d'un ou plusieurs capteurs de direction de vent de l'éolienne ou du parc éolien, d'une direction de vent mesurée à proximité de l'éolienne ; et
l'activation de la stratégie de commande de perte de sillage ajustée pour effectuer les une ou plusieurs actions de commande si le décalage de direction de vent mesuré par la différence déterminée se situe dans une plage prédéfinie de directions de vent d'activation de commande de perte de sillage.

12. Procédé selon une quelconque revendication précédente, dans lequel les une ou plusieurs actions de commande de perte de sillage comprennent au moins l'une parmi :
la réalisation d'une commande de lacet pour faire tourner une nacelle et un rotor de l'éolienne autour d'un angle de lacet par rapport à une tour de l'éolienne pour ajuster une direction de sillage généré par l'éolienne ;
la réalisation d'une commande d'inclinaison pour générer un moment d'inclinaison autour d'un axe d'inclinaison afin d'ajuster une direction du sillage généré par l'éolienne ;
la réalisation d'une commande collective d'actionneur de calage de pales de rotor de l'éolienne ; et
la réalisation d'une commande individuelle d'actionneur de calage des pales de rotor.

13. Dispositif de commande (50) permettant de commander une éolienne (12) d'un parc éolien (10) comprenant une pluralité d'éoliennes, le dispositif de commande étant configuré pour :
récupérer (601) une stratégie de commande de perte de sillage prédéfinie pour l'éolienne (12a), la stratégie de commande de perte de sillage prédéfinie étant destinée à commander l'éolienne pour réaliser une ou plusieurs actions de commande de perte de sillage en fonction de la direction de vent (14) à proximité de l'éolienne, la stratégie de commande de perte de sillage prédéfinie étant destinée à commander le fonctionnement de l'éolienne pour ajuster le sillage (20) généré par l'éolienne à une direction de vent prédite comme entraînant une perte de sillage au niveau d'une autre éolienne de la pluralité d'éoliennes ;
recevoir (602), en provenance de l'autre éolienne, un signal indiquant une direction de vent déterminée comme entraînant une perte de sillage au niveau de l'autre éolienne ;
déterminer (603) une différence entre la direction de vent prédite comme entraînant une perte de sillage et la direction de vent reçue déterminée comme entraînant une perte de sillage ;
déterminer (604) une stratégie de commande de perte de sillage ajustée qui est destinée à commander l'éolienne pour effectuer les une ou plusieurs actions de commande de perte de sillage de la stratégie de commande de perte de sillage prédéfinie en fonction d'un décalage de direction de vent par la différence déterminée ; et
commander (605) l'éolienne conformément à la stratégie de commande de perte de sillage ajustée.

14. Système de commande pour le parc éolien (10) selon la revendication 13, le système de commande comprenant :
un dispositif de commande (50) selon la revendication 13 ; et
un autre dispositif de commande pour commander l'autre éolienne, l'autre dispositif de commande étant configuré pour :
déterminer la direction de vent entraînant une perte de sillage au niveau de l'autre éolienne ; et
transmettre à l'éolienne le signal indiquant la direction de vent déterminée comme entraînant une perte de sillage au niveau de l'autre éolienne.

15. Éolienne (12) comprenant un dispositif de commande (50) selon la revendication 13, ou parc éolien (10) comprenant un système de commande selon la revendication 14.
